# EUROPÄISCHE PATENTSCHRIFT

(11) **EP 1 559 200 B1**
(45) Veröffentlichungstag und Bekanntmachung des Hinweises auf die Patenterteilung: **10.12.2008**
(21) Anmeldenummer: 03773480.3
(22) Anmeldetag: 01.10.2003
(51) Int. Cl.: H04B 1/18, H04B 1/48

(54) **SCHALTUNGSANORDNUNG ZUM BERGRENZEN EINER ÜBERSPANNUNG**
CIRCUIT ARRANGEMENT
CIRCUIT

(30) Priorität: 02.10.2002 DE 10246098
(43) Veröffentlichungstag der Anmeldung: 03.08.2005
(73) Patentinhaber: EPCOS AG, 81669 München (DE)
(72) Erfinder: BLOCK, Christian, A-8510 Stainz (AT); FLÜHR, Holger, A-8010 Graz (AT); PRZADKA, Andreas, 81827 München (DE); RAGOSSNIG, Heinz, A-9360 Friesach (AT)
(74) Vertreter: Epping - Hermann - Fischer
(86) Internationale Anmeldenummer: PCT/DE2003/003274
(87) Internationale Veröffentlichungsnummer: WO 2004/032350

(56) Entgegenhaltungen:
- EP-A- 0 681 365
- EP-A- 1 189 325
- WO-A-00/57515
- DE-A- 19 931 056
- DE-U- 29 604 820
- US-A- 5 914 481
- BENZ ET AL: "Spannungs-, licht- und magnetfeldabhaengige Widerstaende" , TABELLENBUCH RADIO- UNF FERNSEHTECHNIK, FUNKELEKTRONIK, XX, XX, PAGE(S) 130,135,286 XP002232831 Seiten 130, 135
- PATENT ABSTRACTS OF JAPAN vol. 018, no. 218 (E-1539), 19. April 1994 (1994-04-19) -& JP 06 014454 A (MURATA MFG CO LTD;OTHERS: 01), 21. Januar 1994 (1994-01-21)
- PATENT ABSTRACTS OF JAPAN vol. 1999, no. 04, 30. April 1999 (1999-04-30) -& JP 11 027168 A (KANSEI CORP), 29. Januar 1999 (1999-01-29)
- BENZ, HEINKS, STARKE ZASTROW: "tabellenbuch radio- und fernsehtechnik, funkelektronik" 1993, KIESER-VERLAG , NEUSÄSS, DEUTSCHLAND ISBN: 3-8242-3053-9 * Seiten 130,130,286 *

## Beschreibung

Die Erfindung betrifft eine Schaltungsanordnung mit einer Schalteinheit, die mit einem Anschluß für ein Hochfrequenzsignal verbunden ist. Darüber hinaus ist die Schalteinheit mit weiteren Signalleitungen verbunden. Der Anschluß der Schaltungsanordnung ist mit einer Schutzvorrichtung gegen elektrostatische Entladungen verbunden.

Schaltungsanordnungen der eingangs genannten Art werden oft als Multiband-Frontendmodule für Mobiltelefone verwendet. Sie sind in dieser Anwendung am Antenneneingang mit der Antenne des Mobiltelefons verbunden. Die Berührung der Antenne durch einen elektrisch geladenen Benutzer kann zu elektrostatischen Entladung führen, wie sie auch unter dem Namen "Electrostatic Discharge ESD" bekannt sind. Diese elektrostatischen Entladungen können Spannungsspitzen erzeugen, die geeignet sind, die Schaltungsanordnung zu zerstören. Dementsprechend ist es erforderlich, Schaltungsanordnungen der eingangs genannten Art mit einer Schutzvorrichtung gegen ESD auszurüsten.

In Hochfrequenzteilen von Mobiltelefonen werden u.a. Komponenten eingesetzt, die gegenüber elektrostatischen Entladungen empfindlich sind. Diese Komponenten sind beispielsweise akustische Oberflächenwellen-Filter, Galliumarsenid-Schalter, PIN-Dioden, Verstärker oder ähnliche. Sie können durch Einwirkung hochfrequenter Hochspannungspulse, wie sie durch ESD erzeugt werden, irreversibel zerstört werden. Diese Problematik ist für diskrete Galliumarsenid-Schalter und FrontendModule mit integriertem Galliumarsenid-Schalter ebenso relevant wie für Frontendmodul mit pin-Schalttechnologie und integriertem Oberflächenwellen-Filter. Ebenso betrifft die Problematik die ESD-empfindlichen Komponenten, die in den Sende- und Empfangspfaden des Hochfrequenzteils eingesetzt werden. Dies erschwert einen Einsatz in Mobiltelefonen, wodurch externe, zugängliche Antennen, beispielsweise externe Antennen im Auto, elektrostatische Entladungen direkt auf den Antenneneingang des Galliumarsenid-Schalters oder Frontendmoduls möglich sind. Es wird daher von vielen Herstellern von Mobiltelefonen eine ESD-Festigkeit der Frontendmodule bzw. Galliumarsenid-Schalter entsprechend der Norm IEC61000-4-2 in Höhe von 8 kV am Systemlevel gefordert.

Aus der Druckschrift WO 00/57515 sind Schaltungsanordnungen der eingangs genannten Art bekannt, die mit einer Schutzvorrichtung gegen ESD ausgerüstet sind. Die Schutzvorrichtung ist durch einen elektrischen Hochpaß-Filter, bei dem eine Kapazität in Reihe und eine Induktivität parallel zum Antenneneingangspfad geschaltet ist, gebildet.

Der in der bekannten Schaltungsanordnung verwendete Hochpaß-filter zum Schutz der Schaltungsanordnung hat den Nachteil, daß das Schutzelement frequenzabhängig arbeitet. Dabei werden alle Frequenzanteile eines Signals ab einer bestimmten Grenzfrequenz nahezu ungehindert durchgeleitet. Alle anderen Frequenzanteile werden unterdrückt. Diese frequenzabhängige Arbeitsweise hat zur Folge, daß sehr viele Frequenzen, die bei einem Mobiltelefon nicht erwünscht sind, noch durchgelassen werden. Beispielsweise werden bei Mobiltelefonen nach dem GSM-, PCN- oder PCS-Standard Frequenzen zwischen etwa 1 und 2 GHz verwendet. Alle übrigen von der Antenne eingefangenen Frequenzen sind eher störend und müssen daher weggefiltert werden.

Es ist daher Aufgabe der vorliegenden Erfindung, eine Schaltungsanordnung anzugeben, bei der die Schutzvorrichtung gegen elektrostatische Entladungen verbessert ist.

Diese Aufgabe wird gelöst durch eine Schaltungsanordnung nach Patentanspruch 1. Weitere vorteilhafte Ausgestaltungen der Schaltungsanordnung sind den abhängigen Patentansprüchen zu entnehmen.

Es wird eine Schaltungsanordnung angegeben, die einen Anschluß für ein Hochfrequenzsignal aufweist. Ferner weist die Schaltungsanordnung wenigstens zwei weitere Signalleitungen auf. Es ist darüber hinaus eine Schalteinheit vorgesehen, die zur Verbindung des Anschlusses mit einer der Signalleitungen dient. Es ist darüber hinaus eine primäre Schutzvorrichtung vorgesehen, die zwischen dem Anschluß und der Schalteinheit geschaltet ist. Die Schutzvorrichtung enthält ein Spannungsbegrenzungselement, das Spannungsimpulse, die größer als eine Schaltspannung sind, gegen ein Referenzpotential ableitet.

Die Schaltungsanordnung hat den Vorteil, daß die Ableitung der störenden, aufgrund von ESD verursachten Signale nicht mehr frequenzabhängig erfolgt. Vielmehr werden die störenden Signale aufgrund ihres Spannungshubes erkannt und gegen das Referenzpotential abgeleitet. Hierfür ist es vorteilhaft, ein Spannungsbegrenzungselement zu verwenden, das oberhalb einer Schaltspannung einen sehr geringen Widerstand aufweist. Unterhalb der Schaltspannung weist das Spannungsbegrenzungselement einen sehr hohen Widerstand auf, so daß Signale, die unterhalb der Schaltspannung liegen, ungehindert vom Anschluß zur Schalteinheit gelangen und von dort einer Signalleitung zugeschaltet werden können. Andererseits werden Spannungsimpulse, deren Spannungshub größer ist als die Schaltspannung, zuverlässig erkannt und gegen das Referenzpotential abgeleitet.

Somit kann also vorteilhaft verhindert werden, daß Spannungsimpulse, die nicht im Nutzbereich der Schaltungsanordnung liegen und die.einen sehr hohen, störenden Spannungshub aufweisen, ungehindert zur Schalteinheit gelangen.

Durch eine geeignete Wahl der Schaltspannung kann erreicht werden, daß nur solche Signale gegen das Referenzpotential abgeleitet werden, die größer sind als die der Schaltungsanordnung beispielsweise zur Übertragung von Informationen genutzten Signale. Somit können Störsignale, deren Spannungshub die Belastbarkeit bzw. die maximale vorgesehene Belastung der Schaltungsanordnung übersteigen, zuverlässig am Erreichen der Schalteinheit gehindert werden.

Das Referenzpotential kann beispielsweise ein Massepotential sein. Dabei ist jedoch darauf zu achten, daß es sich beispielsweise bei Mobiltelefonen nicht um eine Masse im klassischen Sinne handelt, sondern daß es sich vielmehr um eine lokale Masse handelt, die im wesentlichen die Rolle eines Bezugspotentials spielt, die aber nicht als unendlich gute Ableitung für Ladungsträger angesehen werden kann.

In einer Ausführungsform der Schaltungsanordnung ist eine Schutzvorrichtung vorgesehen, deren Einfügedämpfung kleiner als 0,3 dB ist. Eine solche Schutzvorrichtung hat den Vorteil, daß die Verarbeitung der Nutzsignale in der Schaltungsanordnung kaum beeinträchtigt wird, so daß, beispielsweise bei der Nutzung als Mobiltelefon, auf die Benutzung von unnötig leistungsstarken Verstärker verzichtet werden kann, womit sowohl die Stand-By-Betriebszeit als auch die Übertragungsqualität der Informationen verbessert werden kann.

In der Schaltungsanordnung weist das Spannungsbegrenzungselement eine Kapazität auf, die kleiner als 1 pF ist. Dadurch kann erreicht werden, daß die parasitäre Kapazität des Spannungsbegrenzungselementes ausreichend niedrig ist, um eine Störung der Nutzsignale bzw. eine zu starke Dämpfung der Nutzsignale zu verhindern.

Beispielsweise ist als Spannungsbegrenzungselement eine Galliumarsenid-Doppeldiode geeignet.

Eine solche Doppeldiode kann schaltungstechnisch so in die Schaltungsanordnung integriert werden, daß die primäre Schutzvorrichtung eine Leitung enthält, die den Anschluß mit der Schalteinheit verbindet. Die Leitung ist über das Spannungsbegrenzungselement mit dem Referenzpotential verbunden. Hieraus resultiert quasi eine Parallelschaltung des Spannungsbegrenzungselementes zur Signalleitung.

In der Schaltungsanordnung ist ein zweites Schutzelement parallel zum ersten Spannungsbegrenzungselement geschaltet. In diesem Fall ist es vorteilhaft, wenn zwischen den Schutzelementen in Reihe zur Leitung noch eine Kapazität geschaltet ist.

Durch die Kombination des ersten Spannungsbegrenzungselementes mit einem zweiten Schutzelement kann die Schutzwirkung der Schutzvorrichtung in einen Grobschutz und einen Feinschutz unterteilt werden. Bei der Verwendung einer Galliumarsenid-Doppeldiode für das erste Spannungsbegrenzungselement kann diese als Feinschutz für die Schaltungsanordnung betrachtet werden. Dementsprechend kann das zweite Schutzelement die Funktion des Grobschutzes übernehmen. In diesem Zusammenhang ist unter Grobschutz zu verstehen, daß Ströme bis zu 30 A durch das entsprechende Schutzelement fließen können. Durch das Spannungsbegrenzungselement, das den Feinschutz repräsentiert, sollten dementsprechend kleinere Ströme fließen.

In der Schaltungsanordnung ist das zweite Schutzelement ein Polymersuppressor. Bei diesem Polymersuppressor ist in einer Funkenstrecke noch ein elektrisch leitfähiges Polymer eingebettet, das seine elektrische Leitfähigkeit mit der anliegenden Spannung ändert.

Die Verwendung einer Funkenstrecke ist insbesondere vorteilhaft, da sie sehr leicht in ein keramisches Vielschichtsubstrat integriert werden kann, womit die Integrationsdichte der Schaltungsanordnung vorteilhaft verbessert werden kann. Die Funkenstrecke ist insbesondere geeignet für den Fall, daß die Schalteinheit pin-Dioden enthält.

In einer anderen Ausführungsform der Schaltungsanordnung kann das zweite Schutzelement ein Überspannungsbauelement sein, dessen parasitäre Kapazität 1 pF nicht übersteigt. Eine solche Grenze für die Kapazität ist vorteilhaft, da dadurch gleichzeitig die maximale Einfügedämpfung für das zweite Schutzelement begrenzt wird.

Neben der Galliumarsenid-Doppeldiode ist für das erste Spannungsbegrenzungselement jedes andere Überspannungsbauelement geeignet, dessen parasitäre Kapazität kleiner als 1 pF beträgt und das eine Schaltspannung kleiner als 200 V aufweist. Vorteilhafterweise verwendet man ein erstes Spannungsbegrenzungselement, dessen Schaltspannung kleiner als 100 V ist. Je kleiner die Schaltspannung des ersten Spannungsbegrenzungselementes ist, um so effektiver können empfindliche Komponenten der Schaltungsanordnung vor zu hohen Spannungsimpulsen geschützt werden. Dabei ist jedoch zu berücksichtigen, daß auch die Nutzsignale, die von der Schaltungsanordnung beispielsweise zur Übertragung von Informationen oder Sprache benutzt werden, einen gewissen Signalmindesthub aufweisen, der natürlich von der Schaltspannung des ersten Spannungsbegrenzungselementes nicht erfaßt werden darf, um zu verhindern, daß die Übertragung der Signale bzw. Sprache durch das zweite Schutzelement verschlechtert wird.

Desweiteren kommt als erstes Spannungsbegrenzungselement in Betracht ein Überspannungsbauelement, dessen Einfügedämpfung kleiner als 0,3 dB ist.

In einer anderen Ausführungsform der Schaltungsanordnung sind eine oder mehrere Kontroll-Leitungen vorgesehen zur Steuerung der Schalterstellung der Schalteinheit. Jede Kontroll-Leitung ist vorteilhafterweise, aber nicht zwingend mit einer sekundären Schutzvorrichtung gegen Hochspannungen verbunden.

Diese Ausführungsform der Schaltungsanordnung hat den Vorteil, daß auch Störungen von den Kontroll-Leitungen wirksam unterdrückt werden können. Neben dem direkt über den Anschluß auf die Schaltungsanordnung einlaufenden Störpuls kann nämlich eine elektrostatische Entladung auch über eine Massekopplung, bzw. über eine Kopplung durch das gemeinsame Bezugspotential eine hohe Spannung an der Schaltungsanordnung erzeugen. Dies kann beispielsweise dadurch geschehen, daß der in einem Schalter üblicherweise verwendete Kontroll-Eingang entweder auf einem hohen Potential (high) oder auf einem niedrigen Potential (low) liegt. Dabei ist das hohe Potential (high) dadurch definiert, daß es beispielsweise um 2,3 V über dem Massepotential der Schaltungsanordnung liegt. Da bei einem Mobiltelefon genauso wie bei vielen anderen auf Signalübertragung mittels Antennen basierenden Geräten die Signaleinkopplung von der Antenne zur Erde des Systems läuft, kann auch in dem Fall einer eingangs genannten Schaltungsanordnung eine elektrostatische Entladung sich direkt auf das Massepotential der Schaltungsanordnung auswirken. Über die direkte Kopplung einer Kontroll-Leitung an die Masse durch die Bedingung "high" kann sich der durch eine elektrostatische Entladung entstehende Spannungspuls neben dem Pfad über die Antenne auch noch über die Kontroll-Leitung auf die Schaltungsanordnung auswirken.

In einer Ausführungsform der Schaltungsanordnung ist eine Versorgungsleitung für eine Betriebsspannung vorgesehen. Die Versorgungsleitung ist vorteilhafterweise, aber nicht zwingend mit einer sekundären Schutzvorrichtung gegen elektrostatische Entladungen verbunden. Dabei gilt für mögliche Störpotentiale an der Versorgungsleitung dasselbe wie es weiter oben bereits zu den Kontroll-Leitungen beschrieben worden ist.

Bei einer speziellen Ausführungsform der Schaltungsanordnung sind in der Schalteinheit zwei Feldeffekttransistoren vorgesehen. Jede Schaltstrecke jedes Feldeffekttransistors verbindet dabei den Anschluß mit einer Signalleitung. Jedes Gate jedes Feldeffekttransistors ist mit einer Kontroll-Leitung verbunden. Ferner ist jedes Gate mit einer sekundären Schutzvorrichtung gegen elektrostatische Entladungen verbunden.

Jede der genannten sekundären Schutzvorrichtungen kann ein Spannungsbegrenzungselement enthalten, das eine Schaltspannung aufweist, welche kleiner als 100 V ist. Hierfür kommen beispielsweise ein Varistor oder auch eine Zenerdiode in Betracht.

Um das Ableiten von Störimpulsen auf das gemeinsame Bezugspotential zu erleichtern, sind die jeweiligen Spannungsbegrenzungselemente der sekundären Schutzvorrichtungen mit dem Referenzpotential verbunden.

Als spezielle Ausführungsform der Schaltungsanordnung wird eine Schaltungsanordnung angegeben, bei der der Anschluß der Antenneneingang eines Mobiltelefons ist. Hierfür bietet sich insbesondere die Verwendung der Schaltungsanordnung in einem Mobiltelefon an.

Hierfür ist es auch vorteilhaft, wenn die Signalleitungen die Sende- und Empfangspfade eines Mobiltelefons bilden.

Darüber hinaus ist es vorteilhaft, wenn die Schalteinheit einen Galliumarsenid-Schalter enthält. Solche Galliumarsenid-Schalter sind besonders günstig im Stromverbrauch und sie sind auch sehr schnell.

In einer anderen Ausführungsform der Schaltungsanordnung kann die Schalteinheit und die primäre Schutzvorrichtung sowie gegebenenfalls die sekundäre Schutzvorrichtung in ein Vielschicht-Keramiksubstrat integriert sein. Dadurch kann die Integrationsdichte der Schaltungsanordnung sehr stark erhöht werden, was besonders bei mobilen Anwendungen im Mobilfunk von Vorteil ist.

Im folgenden wird die Erfindung anhand von Ausführungsbeispielen und den dazugehörigen Figuren näher erläutert:
- Figur 1: zeigt beispielhaft eine Schaltungsanordnung in einer schematischen Darstellung.
- Figur 2: zeigt beispielhaft die Ausführung der primären Schutzvorrichtung in einer schematischen Darstellung.
- Figur 2a: zeigt ein weiteres Beispiel für die Ausführung der primären Schutzvorrichtung in einer schematischen Darstellung.
- Figur 3: zeigt eine weitere Schaltungsanordnung beispielhaft in einer schematischen Darstellung.
- Figur 4: zeigt beispielhaft eine weitere Schaltungsanordnung in einer schematischen Darstellung.

Bei den Figuren ist zu beachten, daß Elemente, die einander gleichen oder die die gleiche Funktion ausüben, mit gleichen Bezugszeichen bezeichnet sind.

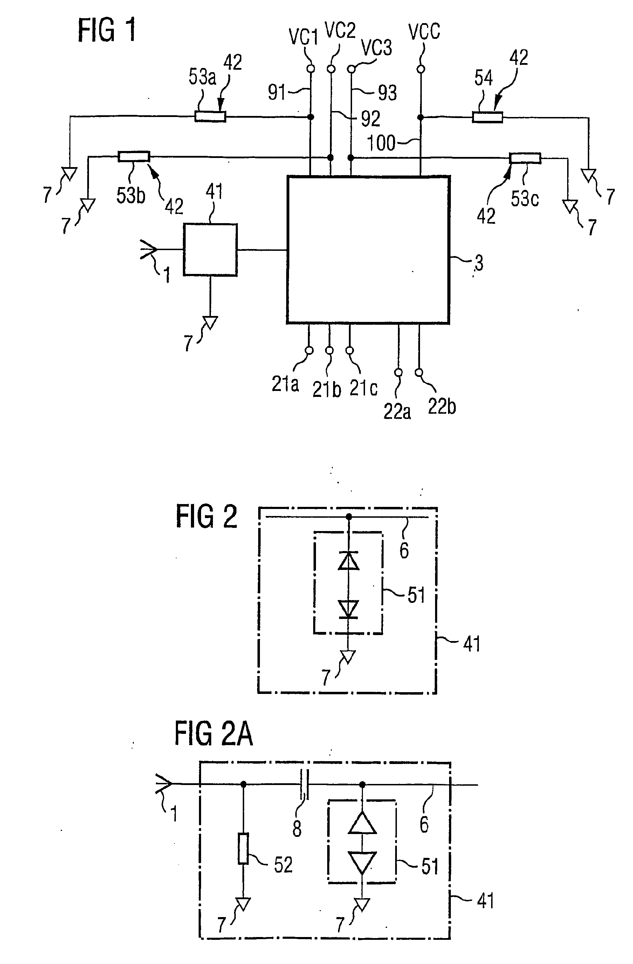

Figur 1 zeigt eine Schaltungsanordnung mit einem Anschluß 1, der als Eingang bzw. Ausgang für ein Hochfrequenzsignal geeignet ist. Es ist ferner eine Schalteinheit 3 vorgesehen, die den Anschluß 1 wahlweise mit einer der Signalleitungen 21a, 21b, 21c, 22a, 22b verbindet.

Zwischen dem Anschluß 1 und der Schalteinheit 3 ist eine primäre Schutzvorrichtung 41 vorgesehen. Sie ist mit dem Referenzpotential 7 verbunden. Zur Steuerung der Schalteinheit 3 sind Kontroll-Leitungen 91, 92, 93 vorgesehen. An den Kontroll-Leitungen 91, 92, 93 liegen Steuerspannungen VC1, VC2, VC3 an. Jede der Kontroll-Leitungen 91, 92, 93 ist mit einer sekundären Schutzvorrichtung 42 verbunden. Jede der Schutzvorrichtungen 42 ist mit dem Referenzpotential 7 verbunden. Die sekundären Schutzvorrichtungen 42 werden gebildet durch Spannungsbegrenzungselemente 53a, 53b, 53c. Diese können beispielsweise Varistoren oder Zener-Dioden sein. Es kommt hierbei insbesondere in Betracht, einen Vielschichtvaristor zu verwenden, der eine Schaltspannung kleiner 100 V aufweist. Es ist darüber hinaus eine Versorgungsleitung 100 vorgesehen, die die Schalteinheit 3 mit Betriebsspannung VCC versorgt und die ebenfalls mit einer sekundären Schutzvorrichtung 42 in Form eines Spannungsbegrenzungselementes 54 versehen ist. Die sekundären Schutzvorrichtungen 42 werden insbesondere dann benötigt, wenn die Schalteinheit 3 einen Galliumarsenid-Schalter enthält. Für den Fall, daß die Schalteinheit 3 PIN-Dioden enthält, kann auf die sekundären Schutzvorrichtungen 42 verzichtet werden. Die Signalleitungen 21a, 21b, 21c können beispielsweise den Rx-Pfaden für das Empfangen von Signalen eines Mobiltelefons zugeordnet sein. Dementsprechend können die Signalleitungen 22a, 22b im Tx-Pfad zum Senden von Mobilfunksignalen eines Mobiltelefons zugeordnet sein.

Die Schalteinheit 3 kann auch ein keramisches Vielschichtbauelement sein, das einen Galliumarsenid-Schalter und darüber hinaus noch passive Komponenten zur Realisierung von Frequenzfiltern enthält.

Der externe Anschluß 1 kann als Hochfrequenzsignaleingang bzw. als Hochfrequenzsignalausgang dienen. Insbesondere kommt es in Betracht, die typischerweise bei Mobiltelefonen benutzten GSM-Signale über den externen Anschluß 1 in die Schalteinheit 3 zu leiten bzw. von der Schalteinheit 3 über den Anschluß 1 nach draußen zu senden.

Eine detaillierte Darstellung der primären Schutzvorrichtung 41 von Figur 1 zeigt die Figur 2. Hier ist beispielhaft angegeben, wie die primäre Schutzvorrichtung 41 gestaltet sein kann. In dem Beispiel von Figur 2 weist die primäre Schutzvorrichtung 41 eine Leitung 6 auf. Die Leitung 6 verbindet den Anschluß 1 mit der Schalteinheit 3. Die Leitung 6 ist verbunden mit einem Spannungsbegrenzungselement 51. Es ist in dem Beispiel von Figur 2 als Galliumarsenid-Doppeldiode und zwar als nppn-Diode ausgebildet. Eine solche Diode hat den Vorteil, daß sie so hergestellt werden kann, daß sie eine Schaltspannung kleiner 100 V aufweist. Ferner ist es möglich, solche Doppeldioden so herzustellen, daß sie eine Einfügedämpfung kleiner 0,1 dB aufweisen. Ferner ist es möglich, Doppeldioden dieser Art so herzustellen, daß sie eine parasitäre Kapazität kleiner 0,1 pF aufweisen. Da sich gemäß Figur 2 das Spannungsbegrenzungselement 51 in einer Parallelschaltung zur Leitung 6 befindet, trägt die gesamte Kapazität des Spannungsbegrenzungselementes 51 zur parasitären Kapazität bei. Das Spannungsbegrenzungselement 51 ist mit dem Referenzpotential 7 verbunden. Es ist darüber hinaus aber auch denkbar, anstelle der nppn-Doppeldiode eine pnnp-Doppeldiode zu verwenden.

Insbesondere wird als Spannungsbegrenzungselement 41 eine Galliumarsenid-Doppeldiode verwendet, deren Schaltspannung zwischen 30 und 100 V beträgt.

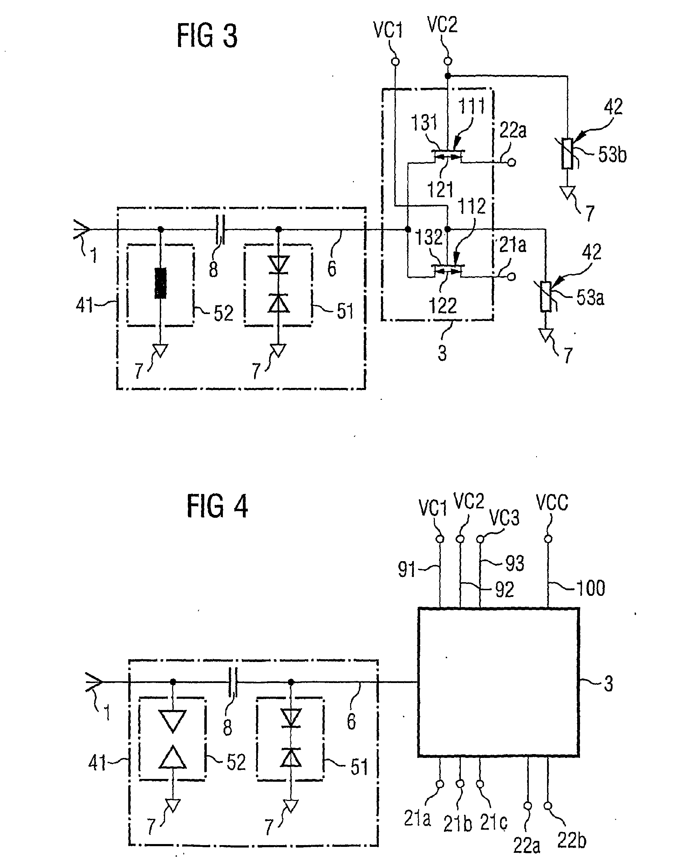

Gemäß Figur 2A ist eine andere Ausführungsform für die primäre Schutzvorrichtung 41 gezeigt. Zusätzlich zum Spannungsbegrenzungselement 51 ist ein weiteres Schutzelement 52 vorgesehen. Das Schutzelement 52 muß nun nicht notwendigerweise ein Bauelement sein, das oberhalb einer Schaltspannung einen sehr geringen und unterhalb der Schaltspannung einen sehr hohen Widerstand aufweist. Das Schutzelement kann seine Schutzfunktion auch als Strombegrenzung ausüben. Die Schutzfunktion des Bauelementes 52 rührt daher, daß es die Leitung 6 mit dem Referenzpotential 7 verbindet, womit in jedem Fall ein endlicher Stromfluß zwischen dem Anschluß 1 und dem Referenzpotential 7 verbunden ist. Demnach kann auch hier davon ausgegangen werden, daß das Schutzelement 52 die Strombelastung des Spannungsbegrenzungselementes 51 begrenzt. Das Schutzelement 52 in Figur 4 ist ein Polymersuppressor. In diesem Fall ist es vorteilhaft, zusätzlich zu den beiden Schutzelementen 51, 52 noch eine Kapazität 8 zwischen die beiden Schutzelemente 51, 52 in Reihe zur Leitung 6 zu schalten.

Die Spannungsbegrenzungselemente 53a, 53b, 53c, 54 sollten eine Schaltspannung aufweisen, die kleiner 100 V ist. Vorzugsweise weisen sie eine Schaltspannung auf, die kleiner 10 V ist. Die Schaltspannungen können hier kleiner gewählt werden, als beim Anschluß 1, da die hier auftretenden Spannungen die üblichen Betriebsspannungen von 5 V normalerweise nicht deutlich überschreiten. Demgegenüber können beim Betrieb eines Mobiltelefons an dem Anschluß 1 Spannungen bis zu 30 V auftreten.

Darüber hinaus zeigt Figur 3 den inneren Aufbau einer beispielhaften Schalteinheit 3. Es sind zwei Feldeffekttransistoren 111, 112 vorgesehen. Jeder Feldeffekttransistor 111, 112 verfügt über eine Schaltstrecke 121, 122, welche über das entsprechende Gate 131, 132 durchgeschaltet oder auch gesperrt werden kann. Die Schaltstrecke 121, 122 verbindet den Anschluß 1 mit einer Signalleitung 21a, 22a. Jedes Gate 131, 132 ist verbunden mit einer Steuerspannung VC1, VC2. Darüber hinaus ist jedes Gate 131, 132 verbunden mit einer sekundären Schutzvorrichtung 42, welche in dem Beispiel von Figur 3 ein Varistor als Spannungsbegrenzungselement ist. Jeder der Varistoren ist seinerseits mit dem Referenzpotential 7 verbunden. Figur 3 ist auch zu entnehmen, daß anstelle der nppn-Doppeldiode von Figur 2 und Figur 2A es auch in Betracht kommt, eine pnnp-Doppeldiode in der primären Schutzvorrichtung 41 zu verwenden.

Die Feldeffekttransistoren 111, 112, die in Figur 3 dargestellt sind, können beispielsweise einen Galliumarsenid-Schalter bilden. Dementsprechend ist es zweckmäßig, wenn die Feldeffekttransistoren 111, 112 auf der Basis von Galliumarsenid ausgeführt sind.

Darüber hinaus können in der beispielhafte Schalteinheit auch mehr als zwei Feldeffekttransistoren enthalten sein. In diesem Fall ist jedes Gate eines jeden Transistors mit einer sekundären Schutzvorrichtung zu beschalten.

Bei einer maximal im Mobiltelefon erzeugten Signalspannung von etwa 30 V wird bei Verwendung von Doppeldioden durch das Verhalten der Diode selbst eine Schaltspannung von etwa 30 bis 60 V erforderlich.

Figur 4 zeigt eine Schaltungsanordnung, bei der für das Schutzelement 52 eine Funkenstrecke gewählt ist. Auch bei Verwendung einer Funkenstrecke ist es vorteilhaft, zusätzlich noch eine Kapazität 8 vorzusehen, die entsprechend Figur 2A und Figur 3 zur Leitung 6 geschaltet ist. Die Verwendung einer Funkenstrecke als Schutzelement 52 ist insbesondere dann vorteilhaft, wenn in der Schalteinheit 3 PIN-Dioden zum Schalten der Signale vom Anschluß 1 auf die Signalleitungen 21a, 21b, 21c, 22a, 22b vorgesehen sind.

Die beschriebene Erfindung beschränkt sich nicht auf Mobiltelefone, sondern kann in jeder Schaltungsanordnung, bei der hochfrequente Signale vorkommen und bei der ein Schutz gegen elektrostatische Entladungen nötig ist, eingesetzt werden.

Bezugszeichenliste
- 1: Anschluß
- 21a, 21b, 21c, 22a, 22b: Signalleitung
- 3: Schalteinheit
- 41: primäre Schutzvorrichtung
- 42: sekundäre Schutzvorrichtung
- 51, 53a, 53b, 53c, 54: Spannungsbegrenzungselement
- 52: Schutzelement
- 6: Leitung
- 7: Referenzpotential
- 8: Kapazität
- 91, 92, 93: Kontroll-Leitung
- 100: Versorgungsleitung
- VCC: Betriebsspannung
- VC1, VC2, VC3: Steuerspannung
- 111, 112: Feldeffekttransistor
- 121, 122: Schaltstrecke
- 131, 132: Gate

## Patentansprüche

1. Schaltungsanordnung
- mit einem Anschluß (1) für ein Hochfrequenzsignal,
- mit wenigstens zwei weiteren Signalleitungen (21a, 21b, 21c, 22a, 22b),
- mit einer Schalteinheit (3) zum Verbinden des Anschlusses (1) mit einer Signalleitung (21a, 21b, 21c, 22a, 22b),
- mit einer primären Schutzvorrichtung (41) gegen elektrostatische Entladungen, die zwischen den Anschluß (1) und die Schalteinheit (3) geschaltet ist,
- bei der die Schutzvorrichtung (41) ein erstes Spannungsbegrenzungselement (51) enthält, das alle Spannungsimpulse, deren Pulshöhe größer als 200 V ist, gegen ein Referenzpotential (7) ableitet,
- bei der das erste Spannungsbegrenzungselement (51) eine Kapazität (8) aufweist, die kleiner als 1 pF ist,
- bei der die Signalleitungen (21a, 21b, 21c, 22a, 22b) Sende- und Empfangspfade eines Mobiltelefons bilden.
- bei der ein zweites Schutzelement (52) parallel zum ersten Spannungsbegrenzungselement (51) geschaltet ist,
- bei der das zweite Schutzelement einen
- Polymer suppressor umfasst.

2. Schaltungsanordnung nach Anspruch 1, bei der das erste Spannungsbegrenzungselement (51) eine Einfügedämpfung aufweist, die kleiner als 0,3 dB ist.

3. Schaltungsanordnung nach einem der Ansprüche 1 bis 2, bei der das erste Spannungsbegrenzungselement (51) eine Galliumarsenid-Doppeldiode ist.

4. Schaltungsanordnung nach einem der Ansprüche 1 bis 3, bei der die primäre Schutzvorrichtung (41) eine Leitung (6) enthält, die den Anschluß (1) mit der Schalteinheit (3) verbindet und bei der das erste Spannungsbegrenzungselement (51) die Leitung (6) mit dem Referenzpotential (7) verbindet.

5. Schaltungsanordnung nach Anspruch 1-4, bei der zwischen den Schutzelementen (51, 52) in Reihe zur Leitung (6) eine Kapazität (8) geschaltet ist.

6. Schaltungsanordnung nach einem der Ansprüche 1-5 bei dem das zweite Schutzelement (52) ein Uberspannungsbauelement ist, dessen Kapazität kleiner 1 pF ist.

7. Schaltungsanordnung nach einem der Ansprüche 1 bis 6,
- bei der eine oder mehrere Kontroll-Leitungen (91, 92, 93) vorgesehen sind zur Steuerung der Schalteinheit,
- bei der jede Kontroll-Leitung (91, 92, 93) mit einer sekundären Schutzvorrichtung (42) gegen elektrostatische Entladungen verbunden ist.

8. Schaltungsanordnung nach einem der Ansprüche 1 bis 7, bei der eine Versorgungsleitung (100) für eine Betriebsspannung (VCC) vorgesehen ist, die mit einer sekundären Schutzvorrichtung (42) gegen elektrostatische Entladungen verbunden ist.

9. Schaltungsanordnung nach einem der Ansprüche 1 bis 8,
- bei der die Schalteinheit (3) zwei Feldeffekttransistoren (111, 112) enthält, wobei die Schaltstrecke (121, 122) jedes Feldeffekttransistors (111, 112) den Anschluß (1) mit einer Signalleitung (21a, 21b, 21c, 22a, 22b) verbindet,
- bei der jedes Gate (131, 132) jedes Feldeffekttransistors (111, 112) mit einer Kontroll-Leitung (91, 92) verbunden ist,
- und bei der jedes Gate (131, 132) mit einer sekundären Schutzvorrichtung (42) gegen elektrostatische Entladungen verbunden ist.

10. Schaltungsanordnung nach einem der Ansprüche 7-9, bei der eine sekundäre Schutzvorrichtung (42) ein Spannungsbegrenzungselement (53a, 53b, 53c, 54) enthält, das eine Schaltspannung aufweist, die kleiner als 100 V ist.

11. Schaltungsanordnung nach einem der Ansprüche 7 bis 10, bei der eine sekundäre Schutzvorrichtung (42) ein Spannungsbegrenzungselement (53a, 53b, 53c, 54) enthält, das ein Varistor ist.

12. Schaltungsanordnung nach einem der Ansprüche 7 bis 11, bei der eine sekundäre Schutzvorrichtung (42) ein Spannungsbegrenzungselement (53a, 53b, 53c, 54) enthält, das eine Zenerdiode ist.

13. Schaltungsanordnung nach einem der Ansprüche 7 bis 12, bei der eines oder mehrere der sekundären Schutzvorrichtungen (42) mit dem Referenzpotential (7) verbunden sind.

14. Schaltungsanordnung nach einem der Ansprüche 1 bis 13, bei der die Schalteinheit (3) PIN-Dioden enthält.

15. Schaltungsanordnung nach einem der Ansprüche 1 bis 14, bei der die Schalteinheit (3) einen Galliumarsenid-Schalter enthält.

16. Schaltungsanordnung nach einem der Ansprüche 1 bis 15, bei der der Anschluß (1) der Antenneneihgang eines Mobiltelefons ist.

17. Schaltungsanordnung nach einem der Ansprüche 1 bis 16, bei der die Schalteinheit (3) und die primäre Schutzvorrichtung (41) in ein Vielschicht-Keramiksubstrat integriert sind.

## Claims

1. Circuit arrangement
- comprising a terminal (1) for a radio-frequency signal,
- comprising at least two further signal lines (21a, 21b, 21c, 22a, 22b),
- comprising a switching unit (3) for connecting the terminal (1) to a signal line (21a, 21b, 21c, 22a, 22b),
- comprising a primary protection device (41) against electrostatic discharges, which is connected between the terminal (1) and the switching unit (3),
- wherein the protection device (41) contains a first voltage limiting element (51), which conducts away all voltage pulses having a pulse height of greater than 200 V relative to a reference potential (7),
- wherein the first voltage limiting element (51) has a capacitance (8) smaller than 1 pF,
- wherein the signal lines (21a, 21b, 21c, 22a, 22b) form transmission and reception paths of a mobile telephone,
- wherein a second protection element (52) is connected in parallel with the first voltage limiting element (51),
- wherein the second protection element comprises a polymer suppressor.

2. Circuit arrangement according to Claim 1, wherein the first voltage limiting element (51) has an insertion loss of less than 0.3 dB.

3. Circuit arrangement according to any of Claims 1 to 2, wherein the first voltage limiting element (51) is a gallium arsenide double diode.

4. Circuit arrangement according to any of Claims 1 to 3,
wherein the primary protection device (41) contains a line (6) that connects the terminal (1) to the switching unit (3), and wherein the first voltage limiting element (51) connects the line (6) to the reference potential (7).

5. Circuit arrangement according to Claims 1 to 4,
wherein a capacitance (8) is connected between the protection elements (51, 52) in series with the line (6).

6. Circuit arrangement according to any of Claims 1 to 5, wherein the second protection element (52) is an overvoltage component having a capacitance of less than 1 pF.

7. Circuit arrangement according to any of Claims 1 to 6,
- wherein one or more control lines (91, 92, 93) are provided for controlling the switching unit,
- wherein each control line (91, 92, 93) is connected to a secondary protection device (42) against electrostatic discharges.

8. Circuit arrangement according to any of Claims 1 to 7, wherein a supply line (100) for an operating voltage (VCC) is provided, which is connected to a secondary protection device (42) against electrostatic discharges.

9. Circuit arrangement according to any of Claims 1 to 8,
- wherein the switching unit (3) contains two field-effect transistors (111, 112), the switching path (121, 122) of each field-effect transistor (111, 112) connecting the terminal (1) to a signal line (21a, 21b, 21c, 22a, 22b),
- wherein each gate (131, 132) of each field-effect transistor (111, 112) is connected to a control line (91, 92),
- and wherein each gate (131, 132) is connected to a secondary protection device (42) against electrostatic discharges.

10. Circuit arrangement according to any of Claims 7 to 9, wherein a secondary protection device (42) contains a voltage limiting element (53a, 53b, 53c, 54) that has a switching voltage of less than 100 V.

11. Circuit arrangement according to any of Claims 7 to 10,
wherein a secondary protection device (42) contains a voltage limiting element (53a, 53b, 53c, 54) that is a varistor.

12. Circuit arrangement according to any of Claims 7 to 11, wherein a secondary protection device (42) contains a voltage limiting element (53a, 53b, 53c, 54) that is a Zener diode.

13. Circuit arrangement according to any of Claims 7 to 12,
wherein one or a plurality of the secondary protection devices (42) is or are connected to the reference potential (7).

14. Circuit arrangement according to any of Claims 1 to 13,
wherein the switching unit (3) contains PIN diodes.

15. Circuit arrangement according to any of Claims 1 to 14,
wherein the switching unit (3) contains a gallium arsenide switch.

16. Circuit arrangement according to any of Claims 1 to 15, wherein the terminal (1) is the antenna input of a mobile telephone.

17. Circuit arrangement according to any of Claims 1 to 16,
wherein the switching unit (3) and the primary protection device (41) are integrated into a multilayer ceramic substrate.

## Revendications

1. Circuit
- ayant une borne (1) pour un signal de haute fréquence,
- ayant au moins deux autres lignes (21a, 21b, 21c, 22a, 22b) de signal,
- ayant une unité (3) de commutation pour relier la borne (1) à une ligne (21a, 21b, 21c, 22a, 22b) de signal,
- ayant un dispositif (41) primaire de protection contre de charges électrostatiques, qui est monté entre la borne (1) et l'unité (3) de commutation,
- dans lequel le dispositif (41) de protection comporte un premier élément (51) de limitation de la tension, qui évacue toutes les impulsions de tension, dont le niveau est plus grand que 200 V par rapport à un potentiel (7) de référence,
- dans lequel le premier élément (51) de limitation de la tension a une capacité (8) qui est plus petite que 1 pF,
- dans lequel les lignes (21a, 21b, 21c, 22a, 22b) de signal forment des trajets d'émission et de réception d'un téléphone mobile,
- dans lequel un deuxième élément (52) de protection est monté en parallèle au premier élément (51) de limitation de la tension,
- dans lequel le deuxième élément de protection comprend un suppresseur de polymère.

2. Circuit suivant la revendication 1,
dans lequel le premier élément (51) de limitation de la tension a une atténuation par insertion, qui est plus petite que 0,3 dB.

3. Circuit suivant l'une des revendications 1 à 2,
dans lequel le premier élément (51) de limitation de la tension est une diode double à l'arséniure de gallium.

4. Circuit suivant l'une des revendications 1 à 3,
dans lequel le dispositif (41) primaire de protection comporte une ligne (6) qui relie la borne (1) à l'unité (3) de commutation et dans lequel le premier élément (51) de limitation de la tension relie la ligne (6) au potentiel (7) de référence.

5. Circuit suivant l'une des revendications 1 à 4,
dans lequel une capacité (8) est montée en série avec la ligne (6) entre les éléments (51, 52) de protection.

6. Circuit suivant l'une des revendications 1 à 5,
dans lequel le deuxième élément (52) de protection est un composant de surtension, dont la capacité est plus petite que 1 pF.

7. Circuit suivant l'une des revendications 1 à 6,
- dans lequel il est prévu une ou plusieurs lignes (91, 92, 93) de contrôle pour la commande de l'unité de commutation,
- dans lequel chaque ligne (91, 92, 93) de contrôle est reliée à un dispositif (42) secondaire de protection vis-à-vis des décharges électrostatiques.

8. Circuit suivant l'une des revendications 1 à 7,
dans lequel il est prévu une ligne (100) d'alimentation en une tension (VCC) de fonctionnement, qui est reliée à un dispositif (42) secondaire de protection contre des décharges électrostatiques.

9. Circuit suivant l'une des revendications 1 à 8,
- dans lequel l'unité (3) de commutation comporte deux transistors (111, 112) à effet de champ, les sections (121, 122) de commutation de chaque transistor (111, 112) à effet de champ reliant la borne (1) à une ligne (21a, 21b, 21c, 22a, 22b) de signal,
- dans lequel chaque grille (131, 132) de chaque transistor (111, 112) à effet de champ est reliée à une ligne (91, 92) de contrôle,
- et dans lequel chaque grille (131, 132) est reliée à un dispositif (42) secondaire de protection vis-à-vis des décharges électrostatiques.

10. Circuit suivant l'une des revendications 7 à 9,
dans lequel un dispositif (42) secondaire de protection comporte un élément (53a, 53b, 53c, 54) de limitation de la tension, qui a une tension de commutation qui est plus basse que 100 V.

11. Circuit suivant l'une des revendications 7 à 10,
dans lequel un dispositif (42) secondaire de protection comporte un élément (53a, 53b, 53c, 54) de limitation de la tension, qui est une varistance.

12. Circuit suivant l'une des revendications 7 à 11,
dans lequel un élément (42) secondaire de protection comporte un élément (53a, 53b, 53c, 54) de limitation de la tension, qui est une diode Zener.

13. Circuit suivant l'une des revendications 7 à 12,
dans lequel un ou plusieurs des dispositifs (42) secondaires de protection est ou sont reliés au potentiel (7) de référence.

14. Circuit suivant l'une des revendications 1 à 13,
dans lequel l'unité (13) de commutation comporte des diodes PIN.

15. Circuit suivant l'une des revendications 1 à 14,
dans lequel l'unité (3) de commutation comporte un commutateur à l'arséniure de gallium.

16. Circuit suivant l'une des revendications 1 à 15,
dans lequel la borne (1) est l'entrée d'antenne d'un téléphone mobile.

17. Circuit suivant l'une des revendications 1 à 16,
dans lequel l'unité (3) de commutation et le dispositif (41) primaire de protection sont intégrés dans un substrat en céramique à plusieurs couches.
